# EUROPÄISCHE PATENTSCHRIFT

(11) **EP 1 346 862 B1**
(45) Veröffentlichungstag und Bekanntmachung des Hinweises auf die Patenterteilung: **25.04.2007**
(21) Anmeldenummer: 03006201.2
(22) Anmeldetag: 19.03.2003
(51) Int. Cl.: B60J 7/02, B62D 25/06

(54) **Dachrahmen eines öffnungsfähigen Fahrzeugdaches**
Roof frame for vehicle open roof
Cadre de toit pour toit ouvrant de véhicule

(30) Priorität: 22.03.2002 DE 10212990
(43) Veröffentlichungstag der Anmeldung: 24.09.2003
(73) Patentinhaber: Webasto AG, 82131 Stockdorf (DE)
(72) Erfinder: De Waal, Martin, 1566 TS Assendelft (NL)

(56) Entgegenhaltungen:
- EP-A- 0 548 483
- EP-A- 1 101 688
- DE-A- 4 012 635
- DE-A- 4 428 913
- DE-A- 10 034 522
- US-A- 5 599 059

## Beschreibung

Die Erfindung betrifft einen Dachrahmen eines öffnungsfähigen Fahrzeugdaches zum Einbau in eine Dachöffnung eines festen Fahrzeugdachs

, wobei zumindest im seitlichen Bereich des Dachrahmens wenigstens eine Halterung vorgesehen ist, die zur Befestigung wenigstens eines sich im Falle eines Seitenaufpralls an einem Seitenholm des festen Fahrzeugdachs abstützenden Stützrohrs dient.

Bei derartigen für den nachträglichen Einbau in ein Fahrzeug vorgesehenen öffnungsfähigen Fahrzeugdächem muss häufig, wenn die Größe des Dachrahmens des einzubauenden Sonnendachs den Abstand zwischen den Dachquerholmen überschreitet, ein Dachquerholm herausgetrennt werden, wodurch die Stabilität des Fahrzeugdaches insbesondere bei einem Seitenaufprall oder einem Überschlag des Fahrzeugs beeinträchtigt wird.

Druckschrift EP-A-1 101 688 offenbart einen Dachrahmen zum nachträglichen Einbau in ein festes Fahrzeugdach, wobei der Dachrahmen mittels am Rand des Fahrzeugdachs angebrachten Stützhalterungen in der Dachöffnung befestigt ist.

Aufgabe der Erfindung ist es, den Dachrahmen eines öffnungsfähigen Fahrzeugdaches so zu gestalten, dass die Stabilität des Fahrzeugdaches erhöht wird.

Diese Aufgabe wird durch einen Dachrahmen mit den Merkmalen des Anspruchs 1 gelöst. Vorteilhafte Ausgestaltungen der Erfindung sind in den Unteransprüchen angegeben.

Im seitlichen Bereich des Dachrahmens ist wenigstens eine Halterung zur Befestigung wenigstens eines Stützrohrs vorgesehen, welches mit seinem freien Ende auf einen Seitenholm des festen Fahrzeugdachs gerichtet ist und vorzugsweise in geringem Abstand vor diesem endet. Dadurch wird bei einem Seitenaufprall bei einer Verformung des Seitenholmes nach innen die Kraft vom Stützrohr aufgenommen und in den Dachrahmen des öffnungsfähigen Fahrzeugdaches eingeleitet. Da auf der anderen Fahrzeugseite ebenfalls vorzugsweise in geringem Abstand vom Seitenholm ein Stützrohr vorgesehen ist, wird die Kraft durch die Stützrohre und den Dachrahmen bis zum gegenüberliegenden Seitenholm durchgeleitet. Die Stützrohre und der Dachrahmen des öffnungsfähigen Fahrzeugdachs übernehmen somit die Stabilitätsfunktion des herausgetrennten Dachquerholms. Statt in geringem Abstand vor den Seitenholmen zu enden, können die Stützrohre im Grenzfall auch an den Seitenholmen anliegen.

Erfindungsgemäß ist die wenigstens eine Halterung an einem Verstärkungsblech angeordnet, das beispielsweise an der Unterseite des Dachrahmens im Bereich einer Ecke angeschweißt ist. Dieses Verstärkungsblech weist vorzugsweise an einem vertikalen Steg mehrere voneinander beanstandete Halterungen auf, so dass das Stützrohr je nach Dachkonstruktion an unterschiedlichen Stellen des Dachrahmens befestigt werden kann. Die Befestigung erfolgt bevorzugt in lösbarer Form mittels einer am Stützrohr angeordneten Flanschplatte. Die Stützrohre sind in ihrer Länge an den Abstand des Dachrahmens zum Seitenholm anpaßbar, so dass ein für den nachträglichen Einbau vorgesehenes öffnungsfähiges Fahrzeugdach an unterschiedliche Fahrzeuge leicht anpaßbar ist.

Nachfolgend wird ein Ausführungsbeispiel eines Dachrahmens unter Bezugnahme auf die Zeichnungen näher erläutert. Es zeigt:

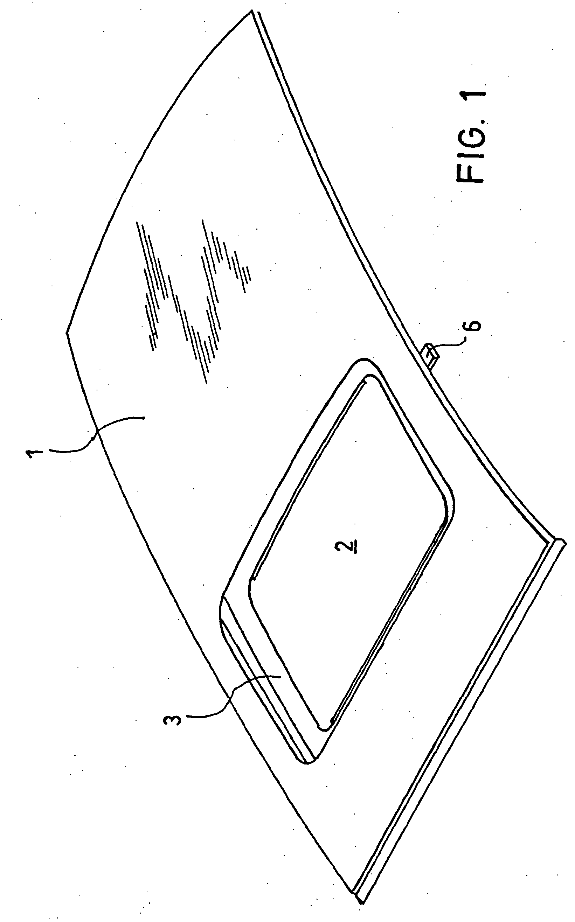

- Fig. 1: eine schematische perspektivische Draufsicht auf ein Fahrzeugdach;
- Fig. 2: eine schematische perspektivische Draufsicht auf die Unterseite des Fahrzeugdaches gemäß Fig. 1;
- Fig. 3: eine vergrößerte perspektivische Darstellung einer hinteren Rahmenecke des Dachrahmens gemäß Fig. 2 und
- Fig. 4: die Rahmenecke gemäß Fig. 3 aus einer anderen Perspektive.

Das feste Fahrzeugdach 1 weist eine Dachöffnung 2 auf, die zum Einbau eines öffnungsfähigen Fahrzeugdaches dient, von welchem in dieser Anmeldung nur der Dachrahmen 3 gezeigt ist. Die übrigen Komponenten eines öffnungsfähigen Fahrzeugdaches, wie Führungsschienen, Betätigungsmechanik und Deckel sind den Fachmann bekannt und für die vorliegende Anmeldung nicht von Bedeutung. Sie wurden daher weggelassen.

Die Dachöffnung 2 wird bei einem serienmäßigen Einbau eines Fahrzeugdaches bereits bei der Herstellung des Dachblechs ausgespart. Bei einem nachträglich eingebauten öffnungsfähigen Fahrzeugdach wird die Dachöffnung 2 mittels einer Schablone angezeichnet und aus dem Blech des festen Fahrzeugdaches herausgeschnitten. Wenn die Größe des einzubauenden öffnungsfähigen Fahrzeugdaches den Abstand der Querholme im Dachbereich des Fahrzeugs übersteigt, wird entsprechend auch ein Querholm herausgetrennt.

Der Dachrahmen 3 wird von der Unterseite um den Rand der Dachöffnung 2 herum am festen Fahrzeugdach 1 befestigt. Zur Erhöhung der Stabilität des gesamten Fahrzeugdaches ist vorgesehen, dass am Dachrahmen 3 ein Verstärkungsblech 4 befestigt ist, an welchem voneinander beanstandete mehrere Halterungen 5 vorgesehen sind, an denen zu beiden Seiten des Dachrahmens 3 jeweils wenigstens ein Stützrohr 6 befestigbar ist.

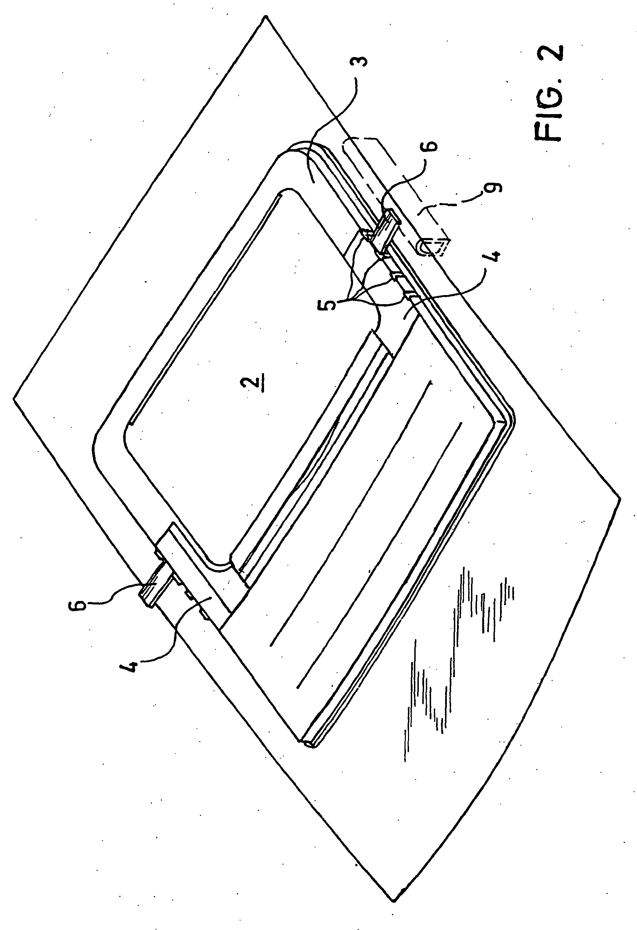

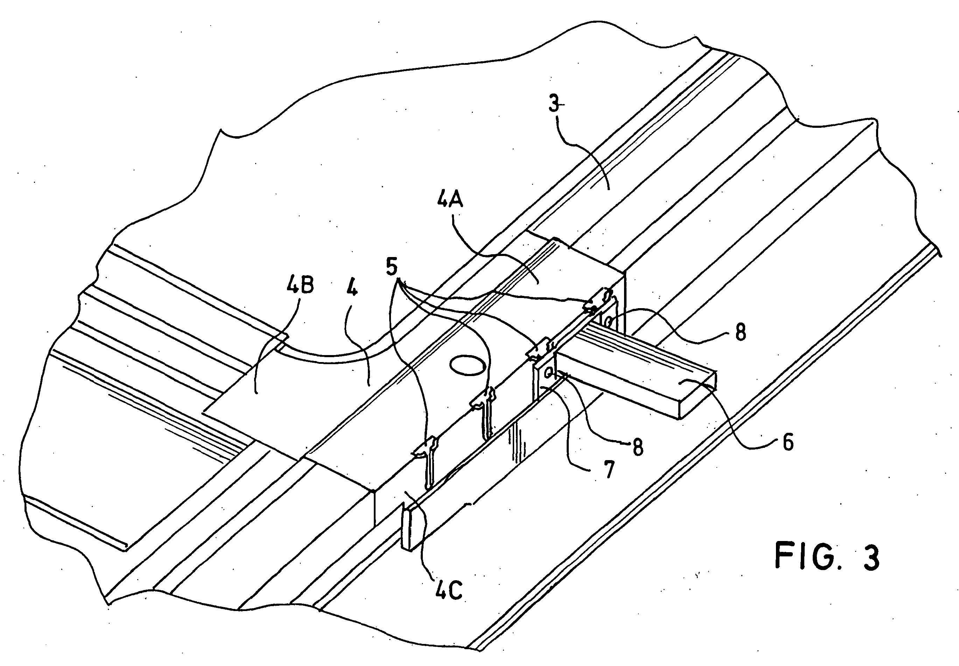

Das Verstärkungsblech 4 ist in Form einer abgewinkelte Platte mit einem seitlichen Schenkel 4A und einem hinteren Schenkel 4B sowie mit einem nach oben abgewinkelte vertikalen Steg 4C ausgeführt. Der seitliche Schenkel 4A und der hintere Schenkel 4B sind flächig an die Kontur des Dachrahmens 3 angepaßt und an diesem durch Kleben oder alternativ dazu durch Schweißen befestigt. Am vertikalen Steg 4C sind die Halterungen 5 in Form von nach außen gerichteten eingeprägten Vorsprüngen angeformt. Die Vorsprünge weisen nach unten geöffnete Schlitze auf (in den Fign. 2 bis 4 nach oben geöffnet, da der Dachrahmen hier in umgekehrter Lage abgebildet ist).

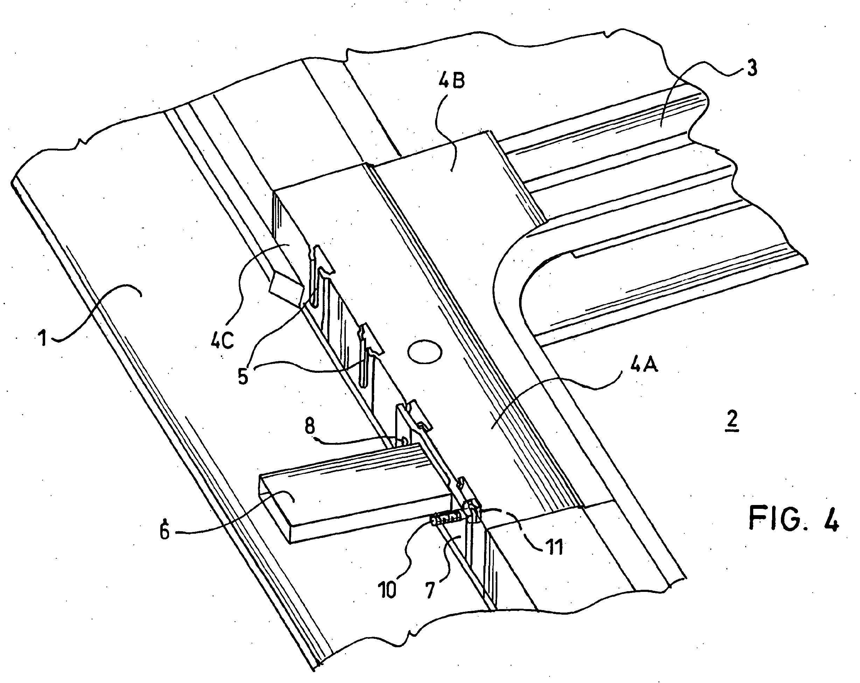

Die sich horizontal nach außen erstreckenden Stützrohre 6 sind als Hohlkastenprofile ausgebildet und mit ihrer dem Dachrahmen 3 zugewandten Innenfläche mit einer senkrecht dazu angeordneten Flanschplatte 7 beispielsweise durch Schweißen verbunden. Die Flanschplatte 7 weist zwei nach außen gerichtete Kröpfungen auf, welche in ihrer Form und in ihren Abständen an die Vorsprünge der Halterungen 5 angepaßt sind. Im Bereich dieser Kröpfungen ist jeweils eine Bohrung 8 vorgesehen, die jeweils mit einem dahinterliegenden Schlitz der Halterung 5 fluchtet. In den Bohrungen 8 werden Schrauben 10 (von denen in Fig. 4 eine angedeutet ist) so eingesetzt, dass deren Köpfe den Halterungen 5 zugewandt sind. Die Halterungen 5 dienen zur unverdrehbaren Aufnahme der Schraubenköpfe, wobei der Schraubenschaft durch die Schlitze hindurchgeführt ist. Nach Einbau des Dachrahmens 3 in das feste Fahrzeugdach 1 werden die Stützrohre 6 von ihrer Länge her an den Abstand zum benachbarten Seitenholm 9 (in Fig. 2 auf einer Seite schematisch angedeutet) angepaßt. Die Stützrohre 6 werden dann mit den in die Bohrungen 8 der Flanschplatte 7 eingeführten Schrauben bzw. mit deren Köpfen in die Halterungen 5 eingeführt. Dadurch, dass gleichmäßig beabstandet voneinander mehrere Halterungen 5 vorgesehen sind, kann der Einsatzort der Stützrohre 6 entsprechend den Stabilitätserfordernissen der jeweiligen Dachkonstruktion frei gewählt werden. Auch wenn im gezeigten Ausführungsbeispiel nur im Bereich der beiden hinteren Ecken der Dachöffnung 2 Verstärkungsbleche 4 gezeigt sind, ist es prinzipiell möglich, derartige Verstärkungsbleche mit Halterungen 5 auch im Bereich der vorderen Ecken der Dachöffnung 2 vorzusehen, so dass bei Bedarf auch auf jeder Seite des Dachrahmens 3 zwei Stützrohre 6 angeordnet werden können.

Auf die Schrauben 10, die die Bohrungen 8 nach außen gerichtet durchdringen werden nach Einführen der Schraubenköpfe in die Halterungen 5 Muttern 11 aufgebracht, durch welche die Flanschplatten 7 gegenüber den Halterungen 5 fixiert werden.

### Bezugszeichenliste

- 1: Fahrzeugdach
- 2: Dachöffnung
- 3: Dachrahmen
- 4: Verstärkungsblech
- 4A: Seitenschenkel (von 4)
- 4B: hinterer Schenkel (von 4)
- 4C: vertikaler Steg (von 4)
- 5: Halterung
- 6: Stützrohr
- 7: Flanschplatte
- 8: Bohrung
- 9: Seitenholm
- 10: Schraube
- 11: Mutter

## Patentansprüche

1. Dachrahmen (3) eines öffnungsfähigen Fahrzeugdaches zum Einbau in eine Dachöffnung (2) eines festen Fahrzeugdachs (1), wobei zumindest im seitlichen Bereich des Dachrahmens (3) wenigstens eine Halterung (5) vorgesehen ist, die zur Befestigung wenigstens eines sich im Falle eines Seitenaufpralls an einem Seitenholm (9) des festen Fahrzeugdachs (1) abstützenden Stützrohrs (6) dient,
**dadurch gekennzeichnet, dass** die wenigstens eine Halterung (5) an einem Verstärkungsblech (4) des Dachrahmens (3) angeordnet ist.

2. Dachrahmen nach Anspruch 1, **dadurch gekennzeichnet, dass** mehrere voneinander beabstandete Halterungen (5) vorgesehen sind.

3. Dachrahmen nach einem der Ansprüche 1 oder 2, **dadurch gekennzeichnet, dass** die Halterungen (5) an einem vertikalen Steg (4C) des Verstärkungsblechs (4) angeordnet sind.

4. Dachrahmen nach einem der Ansprüche 1 bis 3, **dadurch gekennzeichnet, dass** das Stützrohr (6) an einer Flanschplatte (7) angeordnet ist, die an der Halterung bzw. den Halterungen (5) lösbar befestigt ist.

5. Dachrahmen nach einem der Ansprüche 1 bis 4, **dadurch gekennzeichnet, dass** das Verstärkungsblech (4) einen seitlichen Schenkel (4A) zur Anordnung in einem seitlichen Bereich des Dachrahmens (3) und einen hinteren Schenkel (4B) aufweist, der in den hinteren Bereich bzw. in den vorderen Bereich des Dachrahmens (3) hinein reicht.

6. Dachrahmen nach einem der Ansprüche 1 bis 5, **dadurch gekennzeichnet, dass** auf jeder Seite zwei Stützrohre (6) angeordnet sind.

7. Dachrahmen nach einem der Ansprüche 1 bis 6, **dadurch gekennzeichnet, dass** die Stützrohre (6) in ihrer Länge an den Abstand zum Seitenholm (9) anpaßbar sind.

## Claims

1. Roof frame (3) for an openable vehicle roof for installation in a roof opening (2) of a fixed vehicle roof (1), at least one holder (5) being provided at least in the lateral region of the roof frame (3), which holder is used to fix at least one supporting tube (6) which is supported on a side member (9) of the fixed vehicle roof (1) in the event of a side impact,
**characterized in that** the at least one holder (5) is arranged on a reinforcing plate (4) of the roof frame (3).

2. Roof frame according to claim 1, **characterized in that** a plurality of holders (5) spaced apart from one another are provided.

3. Roof frame according to either of claims 1 and 2,
**characterized in that** the holders (5) are arranged on a vertical web (4C) of the reinforcing plate (4).

4. Roof frame according to one of claims 1 to 3,
**characterized in that** the supporting tube (6) is arranged on a flanged plate (7) which is detachably fixed to the holder or the holders (5).

5. Roof frame according to one of claims 1 to 4,
**characterized in that** the reinforcing plate (4) has a lateral limb (4A) to be arranged in a lateral region of the roof frame (3), and a rear limb (4B), which reaches into the rear region or into the front region of the roof frame (3).

6. Roof frame according to one of claims 1 to 5,
**characterized in that** two supporting tubes (6) are arranged on each side.

7. Roof frame according to one of claims 1 to 6,
**characterized in that** the length of the supporting tubes (6) can be matched to the spacing from the side member (9).

## Revendications

1. Cadre de toit (3) d'un toit ouvrant de véhicule, qui est destiné à être encastré dans une ouverture de toit (2) d'un toit fixe de véhicule (1), au moins un dispositif de fixation (5) étant au moins prévu dans la zone latérale du cadre de toit (3), qui sert à fixer au moins un tube d'appui (6) prenant appui sur un montant latéral (9) du toit fixe de véhicule (1) en cas de choc latéral, **caractérisé en ce qu'**au moins l'unique dispositif de fixation (5) est disposé sur une tôle de renfort (4) du cadre de toit (3).

2. Cadre de toit selon la revendication 1, **caractérisé en ce que** sont prévus plusieurs dispositifs de fixation (5) espacés les uns des autres.

3. Cadre de toit selon l'une des revendications 1 et 2, **caractérisé en ce que** les dispositifs de fixation (5) sont disposés sur une aile verticale (4C) de la tôle de renfort (4).

4. Cadre de toit selon l'une des revendications 1 à 3, **caractérisé en ce que** le tube d'appui (6) est disposé sur une plaquette à bride (7) qui est fixée de manière amovible au(x) dispositif(s) de fixation (5).

5. Cadre de toit selon l'une des revendications 1 à 4, **caractérisé en ce que** la tôle de renfort (4) présente une aile latérale (4A) destinée à être disposée dans une zone latérale du cadre de toit (3) et une aile arrière (4B) qui s'étend jusque dans la zone arrière ou avant du cadre de toit (3).

6. Cadre de toit selon l'une des revendications 1 à 5, **caractérisé en ce que** deux tubes d'appui (6) sont disposés de chaque côté.

7. Cadre de toit selon l'une des revendications 1 à 6, **caractérisé en ce que** la longueur des tubes d'appui (6) peut être adaptée à la distance par rapport au montant latéral (9).
